# FASCICULE DE BREVET EUROPEEN

(11) **EP 1 072 642 B1**
(45) Date de publication et mention de la délivrance du brevet: **04.10.2006**
(21) Numéro de dépôt: 00202557.5
(22) Date de dépôt: 19.07.2000
(51) Int. Cl.: C08L 23/02

(54) **Article imprimable à base de polyolefine**
Bedruckbarer Artikel auf der Basis von Polyolefin
Printable article based on polyolefin

(30) Priorité: 26.07.1999 BE 9900505
(43) Date de publication de la demande: 31.01.2001
(73) Titulaire: SOLVAY INDUSTRIAL FOILS MANAGEMENT AND RESEARCH, 1050 Bruxelles (BE)
(72) Inventeur: Hruska, Zdenek, 81375 Munich (DE)
(74) Mandataire: Patentanwälte Zellentin & Partner

(56) Documents cités:
- DE-A- 19 602 545
- DATABASE WPI Derwent Publications Ltd., London, GB; AN 1980-85431c XP002134550 & JP 55 133959 A (HONSHU PAPER), 18 octobre 1980 (1980-10-18)

## Description

La présente invention concerne un article à base de polyoléfine(s) apte à être imprimé notamment par des techniques d'impression digitale telles que l'électrophotographie.

Dans de nombreuses applications, des articles constitués de matière plastique, et en particulier des films, feuilles et corps creux, sont imprimés au moyen de techniques d'impression classiques, au moyen d'encres à base de colorants dissous dans des solvants. Des techniques de traitement superficiel des supports ont été développées en vue d'améliorer l'adhérence de ces encres classiques sur différents supports. Ainsi, dans la demande de brevet européen EP 678398 (SOLVAY), on indique que l'oxyfluoration d'articles à base de polyoléfines dans des conditions particulières permet de les imprimer au moyen d'encres pour PVC, ce qui n'est pas possible en l'absence de ce traitement superficiel.

Dans ces dernières années, on assiste cependant au développement de techniques d'impression dites "sans contact", par exemple la technique de l'électrophotographie. Cette technique, largement utilisée dans les imprimantes digitales pilotées par ordinateur, fait usage d'encres qui sont totalement différentes de celles utilisées dans les techniques d'impression classiques, et qui sont généralement qualifiées de « toners ». Ainsi, dans l'éléctrophotographie au moyen d'encres sèches, le toner est une fine poudre, qui est déposée sur le support à imprimer dans une première étape et fondue dans une second étape de façon à provoquer son adhérence au support (exemple : procédé XEIKON®). Dans l'éléctrophotographie au moyen d'encres liquides, le toner est une poudre dispersée dans un diluant non solvant (exemple : procédé INDIGO®). Qu'ils soient liquides ou secs, ces toners possèdent des caractéristiques entièrement différentes des encres classiques, et ne conviennent généralement pas aux mêmes substrats. Ainsi, si l'on tente d'imprimer un film de polyoléfine par électrophotographie, que ce soit au moyen d'encres sèches ou liquides, et même après traitement corona, on obtient de très mauvais résultats, en ce sens que l'adhérence du toner au film est quasi-nulle. Ceci oblige généralement les fabricants de supports polymériques destinés à cette technique à revêtir leurs supports d'une couche superficielle d'un revêtement apte à l'impression, par exemple à base de polyéthylène téréphtalate (PET) ou de polyamide. La réalisation d'un tel revêtement conduit naturellement à un accroissement notable du coût du support, et peut dans certains cas nuire à certaines de ses propriétés mécaniques, visuelles ou autres.

JP A 55/133959 décrit un film à base de polypropylène dont l'imprimabilité a été améliorée par l'ajout d'une couche de surface comprenant du polyéthylène-imine. Le film multicouche est toutefois coûteux à mettre en oeuvre.

Il est également connu (DE-A-19602545) de réaliser des films à base d'un mélange de polypropylène et de polyéthylène-imine. Les films sont apparus avoir une imperméabilité insuffisante.

La présente invention vise à remédier à ces inconvénients en fournissant un article à base de polyoléfine utilisable notamment dans les procédés d'impression par électrophotographie au moyen de toners secs ou liquides, qui soit simple à fabriquer et peu coûteux.

La présente invention vise dès lors à fournir un article monocouche imprimable à base de polyoléfine, comprenant au moins une polyoléfine et de 0,1 à 5 % en poids d'au moins un polyaminoalkylène, soumis à un traitement superficiel oxydatif, ladite polyoléfine étant un copolymère statistique d'éthylène et de propylène comprenant au moins 2 % en poids d'éthylène et le traitement superficiel oxydatif étant choisi parmi un traitement corona réalisé en présence d'oxygène, un traitement d'oxyfluoration au moyen d'un mélange gazeux comprenant de l'oxygène et du fluor, un traitement au moyen d'un plasma oxydatif, un traitement à l'ozone en présence de rayons ultraviolets et un traitement par flammage.

Par « article à base de polyoléfine », on entend désigner des articles dont au moins une partie de la surface (généralement une partie destinée à être imprimée) comprend au moins 60 % (et de préférence au moins 80 %) en poids d'au moins une polyoléfine, c'est-à-dire d'un polymère comprenant au moins 80 % en poids d'une ou plusieurs oléfines telle que l'éthylène, le propylène, le butène, le styrène, un diène, etc. Ces oléfines peuvent être aliphatiques, aromatiques, cycliques ou autres. Outre une ou plusieurs oléfines, la polyoléfine peut éventuellement comprendre un ou plusieurs autres monomères tels que le monoxyde de carbone, des groupements acryliques, etc. On préfère cependant que la polyoléfine ne contienne aucun monomère non-oléfinique. Selon une variante avantageuse, la polyoléfine contient au moins 94 % en poids d'une même oléfine, et éventuellement jusqu'à 6 % d'une ou plusieurs autres oléfines. Outre au moins une telle polyoléfine, l'article peut comprendre un ou plusieurs additifs usuels tels que stabilisants, lubrifiants, antioxydants, pigments, matières de charge, etc. Eventuellement, l'article peut par ailleurs comprendre un ou plusieurs autres polymères (de préférence thermoplastiques). A l'exception d'un ou plusieurs polyaminoalkylènes tels que décrits ci-dessous, on préfère toutefois que l'article ne comprenne aucun polymère qui ne soit pas une polyoléfine. Avantageusement, la polyoléfine comprend au moins 80 % en poids de propylène. Selon l'invention, la polyoléfine est un copolymère statistique d'éthylène et de propylène contenant au moins 2% d'éthylène. Un tel polymère favorise en effet la migration en surface du polyaminoalkylène.

L'article peut être de tout type, par exemple une feuille, un film, une plaque, un corps creux ou un corps plein. Il s'agit avantageusement d'un film ou d'une plaque. Cet article peut avoir été fabriqué par toute technique appropriée, par exemple par pressage, injection, extrusion, extrusion-soufflage, calandrage, etc. L'invention s'applique tout particulièrement à la fabrication de films souples d'une épaisseur de moins de 0,5 mm. De bons résultats ont été obtenus lorsque l'article est un film multicouche comprenant une première couche de matière plastique fortement chargée et une seconde couche (superficielle), non-chargée, comprenant une polyoléfine et un polyaminoalkylène et ayant subi un traitement superficiel oxydatif comme décrit ci-dessus.

Toutefois, selon l'invention, l'article est monocouche.

En effet, un avantage considérable de l'invention est que cette combinaison d'une polyoléfine particulière, d'un polyaminoalkylène et d'un traitement superficiel oxydatif, permet de fabriquer des articles dépourvus de revêtement superficiel coûteux, mais présentant néanmoins une excellente imprimabilité vis-à-vis notamment de techniques telles que l'électrophotographie.

Le polyaminoalkylène (ci-après qualifié de « PAA ») est un polymère essentiellement constitué de groupements aminoalkylène, c'est-à-dire comprenant un groupe amine et un radical alkylène en C2 à C5, qui est de préférence un radical éthylène. Le groupe amine est éventuellement protonné, c'est-à-dire se présentant sous la forme de son acide conjugué. A titre de groupements aminoalkylène, on peut par exemple citer -CH₂-CH₂-NH₂⁺-,-CH₂-CH₂-NH⁺<, >N-CH₂-CH₂-CH₂-N< ou -CH₂-CH₂-N<. Des polymères de ce type sont disponibles commercialement, par exemple des polyalkylène-imines ou des dendrimères de poly(iminopropane-1,3-diyle) à groupements terminaux NH₂. Parmi les polyalkylène-imines, on préfère utiliser les polyéthylène-imines. Panni les dendrimères, on préfère utiliser ceux qui comportent au moins 8 groupements terminaux -NH₂ par molécule.

Le PAA peut éventuellement être modifié par des groupements alkyle, aryle ou alkoxy. Par exemple, le PAA peut avoir été greffé par de l'acide stéarique. La masse moléculaire du PAA est de préférence comprise entre 2000 et 25000 g/mol. Plusieurs PAA peuvent éventuellement être utilisées en mélange.

La quantité de PAA est exprimée par rapport au poids du ou des polymères présents (autres que le PAA). Sa quantité est de préférence inférieure ou égale à 1 %, et de manière particulièrement préférée inférieure ou égale à 0,6 %. De manière surprenante, on a constaté que des proportions extrêmement faibles de PAA permettaient d'obtenir une amélioration notable de l'imprimabilité, tout en évitant d'affecter significativement les propriétés de l'article.

Par traitement superficiel oxydatif, on entend désigner un traitement superficiel tel que par exemple un traitement corona réalisé en présence d'oxygène, un traitement d'oxyfluoration au moyen d'un mélange gazeux comprenant de l'oxygène et du fluor, un traitement au moyen d'un plasma oxydatif, un traitement à l'ozone en présence de rayons ultraviolets, ou un traitement par flammage. Plusieurs tels traitements peuvent éventuellement être combinés. Bien qu'on traite généralement toute la surface de l'article (ou la totalité de l'une de ses faces dans le cas d'un article à 2 faces tel qu'un film ou un corps creux), il est naturellement possible de ne traiter qu'une partie de la surface de l'article, par exemple uniquement la ou les zones superficielles qui seront ultérieurement imprimées.

Le traitement d'oxyfluoration s'effectue de préférence dans des conditions telles que, dans la zone superficielle traitée, le rapport atomique oxygène/carbone (O/C), mesuré par spectroscopie ESCA (Electron Spectroscopy for Chemical Analysis) à une profondeur de 1,5 nm, soit d'au moins 0,08, et que le rapport atomique fluor/carbone (F/C), mesuré de la même façon, ait une valeur d'au moins 90 % de celle du rapport O/C, et d'au plus 290 % de ce rapport. De préférence, il se déroule dans des conditions telles que le rapport atomique O/C soit supérieur à 0,1. Le rapport O/C est par ailleurs généralement inférieur à 0,4, et de préférence inférieur à 0,3. De préférence, le rapport F/C est supérieur à 95 % du rapport O/C. Avantageusement, il est inférieur à 200 % de ce rapport.

Pour l'impression par électrophotographie au moyen de toners liquides, il est préférable que le traitement d'oxyfluoration soit modéré, c'est-à-dire conduise en surface à un rapport atomique F/C (mesuré comme indiqué ci-dessus) inférieur à 0,1.

Le traitement corona s'effectue de préférence à une température inférieure à 100°C, et avec une énergie corona spécifique de 50 à 500 W.min/m². Le traitement corona conduit à d'excellents résultats aussi bien pour l'impression par toners secs que liquides, aussi préfère-t-on que le traitement superficiel oxydatif comprenne un traitement corona.

Dès lors, un autre objet de la présente invention est un Procédé de fabrication d'un article imprimable à base de polyoléfine, selon lequel au moins une zone superficielle de l'article, comprenant au moins une polyoléfine et de 0,1 à 5 % en poids d'au moins un polyaminoalkylène, est soumise à un traitement superficiel oxydatif. De préférence, le traitement superficiel oxydatif comprend un traitement corona.

L'invention concerne en outre un procédé d'impression selon lequel on imprime un article à base de polyoléfine, comprenant de 0,1 à 5 % en poids d'au moins un polyaminoalkylène, traité au moyen d'un traitement superficiel oxydatif, en utilisant une technique d'électrophotographie.

En ce qui concerne ces procédés, les préférences susmentionnées restent d'application.

### EXEMPLES

Les exemples suivants illustrent l'invention de façon non limitative. Les exemples 3 et 4 sont conformes à l'invention, et les exemples 1R, 2R et 5R à 7Rsont donnés à titre de comparaison.

Le tableau suivant résume plusieurs essais réalisés en imprimant par la technique INDIGO® (électrophotographie au moyen d'un toner liquide) différents films d'une épaisseur de 100 µm, obtenus en extrudant un copolymère du propylène contenant 3 % d'éthylène (SOLVAY ELTEX® P KS001F) auquel était le cas échéant mélangé un PAA (le produit LUPASOL® WF est une polyéthylène-imine d'une masse moléculaire de 20000 à 25000 g/mol).

L'imprimabilité de ces films a été évaluée selon la norme ASTM D3359-93 (méthode A), et est indiquée dans le tableau ci-dessous selon une échelle de 0A (très mauvaise imprimabilité) à 5A (très bonne imprimabilité).

Lorsqu'un traitement corona est mentionné, il a été effectué à température ambiante, avec une énergie corona spécifique (SCE) d'environ 190 W.min/m².

| Exemple | **Article** | **PAA** (% en poids) | Imprimabilité |
|---|---|---|---|
| 1R | film PP non-traité | LUPASOL WF (0,5 %) | 2A |
| 2R | film PP fluoré (F/C = 0,25) | LUPASOL WF (0,5 %) | 3A |
| 3 | film PP oxyfluoré (F/C = 0,096) | LUPASOL WF (0,5 %) | 4A/5A |
| 4 | film PP traité corona | LUPASOL WF (0,5 %) | 5A |
| 5R | film PP non-traité | 0 % | 0A |
| 6R | film PP traité corona | 0 % | 0A |
| 7R | film PP oxyfluoré | 0 % | 0A |

On constate clairement qu'un traitement superficiel oxydatif est essentiel, et que c'est le traitement corona qui donne les meilleurs résultats.

## Revendications

1. Article monocouche imprimable à base de polyoléfine, comprenant au moins une polyoléfine et de 0,1 à 5 % en poids d'au moins un polyaminoalkylène, soumis à un traitement superficiel oxydatif, ladite polyoléfine étant un copolymère statistique d'éthylène et de propylène comprenant au moins 2 % en poids d'éthylène et le traitement superficiel oxydatif étant choisi parmi un traitement corona réalisé en présence d'oxygène, un traitement d'oxyfluoration au moyen d'un mélange gazeux comprenant de l'oxygène et du fluor, un traitement au moyen d'un plasma oxydatif, un traitement à l'ozone en présence de rayons ultraviolets et un traitement par flammage.

2. Procédé de fabrication d'un article monocouche imprimable à base de polyoléfine, selon lequel au moins une zone superficielle de l'article, comprenant au moins une polyoléfine et de 0,1 à 5 % en poids d'au moins un polyaminoalkylène, est soumise à un traitement superficiel oxydatif, ladite polyoléfine étant un copolymère statistique d'éthylène et de propylène comprenant au moins 2 % en poids d'éthylène et le traitement superficiel oxydatif étant choisi parmi un traitement corona réalisé en présence d'oxygène, un traitement d'oxyfluoration au moyen d'un mélange gazeux comprenant de l'oxygène et du fluor, un traitement au moyen d'un plasma oxydatif, un traitement à l'ozone en présence de rayons ultraviolets et un traitement par flammage.

3. Procédé selon la revendication 2, dans lequel la polyoléfine comprend au moins 80 % en poids de propylène.

4. Procédé selon l'une des revendications 2 ou 3, dans lequel l'article monocouche se présente sous la forme d'un film.

5. Procédé selon l'une des revendications 2 à 4, dans lequel le polyaminoalkylène est un polyéthylène-imine.

6. Procédé selon l'une des revendications 2 à 5, dans lequel le traitement superficiel oxydatif comprend un traitement corona.

7. Procédé selon la revendication précédente, dans lequel le traitement corona s'effectue à une température inférieure à 100°C et avec une énergie corona spécifique de 50 à 500 W.min/m2.

8. Procédé selon l'une des revendications 2 à 5, dans lequel le traitement superficiel oxydatif est un traitement d'oxyfluoration au moyen d'un mélange gazeux comprenant de l'oxygène et du fluor.

9. Procédé selon la revendication précédente, dans lequel le traitement d'oxyfluoration s'effectue dans des conditions telles que, dans la zone superficielle traitée, le rapport atomique oxygène/carbone (O/C) mesuré par spectroscopie ESCA (Electron Spectroscopy for Chemical Analysis) à une profondeur de 1.5 nm, soit d'au moins 0.08, et que le rapport atomique fluor/carbone (F/C), mesuré de la même façon, ait une valeur d'au moins 90 % de celle du rapport O/C, et d'au plus 290 % de ce rapport.

10. Procédé d'impression selon lequel on imprime un article monocouche à base de polyoléfine, comprenant de 0,1 à 5 % en poids d'au moins un polyaminoalkylène, traité au moyen d'un traitement superficiel oxydatif, en utilisant une technique d'électrophotographie, ladite polyoléfine étant un copolymère statistique d'éthylène et de propylène comprenant au moins 2 % en poids d'éthylène et le traitement superficiel oxydatif étant choisi parmi un traitement corona réalisé en présence d'oxygène, un traitement d'oxyfluoration au moyen d'un mélange gazeux comprenant de l'oxygène et du fluor, un traitement au moyen d'un plasma oxydatif, un traitement à l'ozone en présence de rayons ultraviolets et un traitement par flammage.

## Claims

1. Polyolefin-based printable monolayer article comprising at least one polyolefin and from 0.1 to 5% by weight of at least one polyaminoalkylene which is subjected to an oxidative surface treatment, the said polyolefin being a random copolymer of ethylene and of propylene comprising at least 2% by weight of ethylene and the oxidative surface treatment being chosen from a corona treatment carried out in the presence of oxygen, an oxyfluorination treatment by means of a gas mixture comprising oxygen and fluorine, a treatment by means of an oxidative plasma, a treatment with ozone in the presence of ultraviolet radiation, and a flame-brushing treatment.

2. Process for the manufacture of a polyolefin-based printable monolayer article, according to which at least one surface region of the article comprising at least one polyolefin and from 0.1 to 5% by weight of at least one polyaminoalkylene is subjected to an oxidative surface treatment, the said polyolefin being a random copolymer of ethylene and of propylene comprising at least 2% by weight of ethylene and the oxidative surface treatment being chosen from a corona treatment carried out in the presence of oxygen, an oxyfluorination treatment by means of a gas mixture comprising oxygen and fluorine, a treatment by means of an oxidative plasma, a treatment with ozone in the presence of ultraviolet radiation, and a flame-brushing treatment.

3. Process according to Claim 2, in which the polyolefin comprises at least 80% by weight of propylene.

4. Process according to either of Claims 2 and 3, in which the monolayer article is provided in the form of a film.

5. Process according to one of Claims 2 to 4, in which the polyaminoalkylene is a polyethyleneimine.

6. Process according to one of Claims 2 to 5, in which the oxidative surface treatment comprises a corona treatment.

7. Process according to the preceding claim, in which the corona treatment is carried out at a temperature of less than 100°C and with a specific corona energy of 50 to 500 W.min/m².

8. Process according to one of Claims 2 to 5, in which the oxidative surface treatment is an oxyfluorination treatment by means of a gas mixture comprising oxygen and fluorine.

9. Process according to the preceding claim, in which the oxyfluorination treatment is carried out under conditions such that, in the surface region treated, the oxygen/carbon (O/C) atomic ratio, measured by ESCA (Electron Spectroscopy for Chemical Analysis) spectroscopy at a depth of 1.5 nm, is at least 0.08 and that the fluorine/carbon (F/C) atomic ratio, measured in the same way, has a value of at least 90% of that of the O/C ratio and of at most 290% of this ratio.

10. Printing process, according to which the polyolefin-based monolayer article comprising from 0.1 to 5% by weight of at least one polyaminoalkylene and treated by means of an oxidative surface treatment is printed by using an electrophotography technique, the said polyolefin being a random copolymer of ethylene and of propylene comprising at least 2% by weight of ethylene and the oxidative surface treatment being chosen from a corona treatment carried out in the presence of oxygen, an oxyfluorination treatment by means of a gas mixture comprising oxygen and fluorine, a treatment by means of an oxidative plasma, a treatment with ozone in the presence of ultraviolet radiation, and a flame-brushing treatment.

## Patentansprüche

1. Einlagiger bedruckbarer Gegenstand auf Polyolefinbasis, der wenigstens ein Polyolefin und 0,1 bis 5 Gew.-% wenigstens eines Polyaminoalkylens umfaßt und der einer oxidierenden Oberflächenbehandlung unterzogen worden ist, wobei das Polyolefin ein statistisches Copolymer aus Ethylen und Propylen mit einem Gehalt an wenigstens 2 Gew.-% Ethylen ist und die oxidierende Oberflächenbehandlung unter einer in Gegenwart von Sauerstoff ausgeführten Corona-Behandlung, einer Oxyfluorierungsbehandlung mit Hilfe eines Sauerstoff und Fluor umfassenden Gasgemisches, einer Behandlung mit einem oxidierenden Plasma, einer Ozonbehandlung in Gegenwart von Ultraviolettstrahlen und unter einer Flämmbehandlung ausgewählt wird.

2. Verfahren zur Herstellung eines einlagigen bedruckbaren Gegenstandes auf Polyolefinbasis, wonach wenigstens ein Oberflächenbereich des Gegenstandes, der wenigstens ein Polyolefin und 0,1 bis 5 Gew.-% wenigstens eines Polyaminoalkylens umfaßt, einer oxidierenden Oberflächenbehandlung unterzogen wird, wobei das Polyolefin ein statistisches Copolymer aus Ethylen und Propylen mit einem Gehalt an wenigstens 2 Gew.-% Ethylen ist und die oxidierende Oberflächenbehandlung unter einer in Gegenwart von Sauerstoff ausgeführten Corona-Behandlung, einer Oxyfluorierungsbehandlung mit Hilfe eines Sauerstoff und Fluor umfassenden Gasgemisches, einer Behandlung mit einem oxidierenden Plasma, einer Ozonbehandlung in Gegenwart von Ultraviolettstrahlen und unter einer Flämmbehandlung ausgewählt wird.

3. Verfahren nach Anspruch 2, worin das Polyolefin wenigstens 80 Gew.-% Propylen umfaßt.

4. Verfahren nach einem der Ansprüche 2 oder 3, worin der einlagige Gegenstand in Form eines Filmes oder einer Folie vorliegt.

5. Verfahren nach einem der Ansprüche 2 bis 4, worin das Polyaminoalkylen ein Polyethylenimin ist.

6. Verfahren nach einem der Ansprüche 2 bis 5, worin die oxidierende Oberflächenbehandlung eine Corona-Behandlung umfaßt.

7. Verfahren nach dem vorstehenden Anspruch, worin die Corona-Behandlung bei einer Temperatur unter 100°C und mit einer spezifischen Corona-Energie von 50 bis 500 W.min/m² erfolgt.

8. Verfahren nach einem der Ansprüche 2 bis 5, worin die oxidierende Oberflächenbehandlung eine Oxyfluorierungsbehandlung mit Hilfe eines Sauerstoff und Fluor umfassenden Gasgemisches ist.

9. Verfahren nach dem vorstehenden Anspruch, worin die Oxyfluorierungsbehandlung unter solchen Bedingungen erfolgt, daß in dem behandelten Oberflächenbereich das Atomverhältnis Sauerstoff/Kohlenstoff (O/C), bestimmt durch ESCA (Electron Spectroscopy for Chemical Analysis)-Spektroskopie in einer Tiefe von 1,5 nm, wenigstens 0,08 beträgt und daß das in gleicher Weise bestimmte Atomverhältnis Fluor/Kohlenstoff (F/C) einen Wert von wenigstens 90 % des Wertes des O/C-Verhältnisses und höchstens 290 % dieses Verhältnisses aufweist.

10. Druckverfahren, wonach ein einlagiger Gegenstand auf Polyolefinbasis bedruckt wird, der 0,1 bis 5 Gew.-% wenigstens eines Polyaminoalkylens umfaßt und mit einer oxidierenden Oberflächenbehandlung behandelt worden ist, unter Anwendung einer Elektrofotographietechnik, worin das Polyolefin ein statistisches Copolymer von Ethylen und Propylen mit einem Gehalt an wenigstens 2 Gew.-% Ethylen ist und die oxidierende Oberflächenbehandlung unter einer in Gegenwart von Sauerstoff vorgenommenen Corona-Behandlung, einer Oxyfluorierungsbehandlung mit Hilfe eines Sauerstoff und Fluor umfassenden Gasgemisches, einer Behandlung mit einem oxidierenden Plasma, einer Ozonbehandlung in Gegenwart von Ultraviolettstrahlen und unter einer Flämmbehandlung ausgewählt wird.
